# EUROPEAN PATENT SPECIFICATION

(11) **EP 4 382 244 B1**
(45) Date of publication and mention of the grant of the patent: **02.09.2026**
(21) Application number: 23835892.3
(22) Date of filing: 07.07.2023
(51) Int. Cl.: B23K 26/70, B23K 26/14, H01M 50/516, B23K 26/21, B23K 26/06, B23K 26/16, B23K 26/142

(54) **WELDING DEVICE**
SCHWEISSVORRICHTUNG
DISPOSITIF DE SOUDAGE

(30) Priority: 08.07.2022 KR 20220084678; 03.11.2022 KR 20220145485
(43) Date of publication of application: 12.06.2024
(73) Proprietor: LG ENERGY SOLUTION, LTD., Seoul 07335 (KR)
(72) Inventor: Lee, Chang-Je, Daejeon 34122 (KR); Kang, Min-Jae, Daejeon 34122 (KR)
(74) Representative: Plasseraud IP
(86) International application number: PCT/KR2023/009706
(87) International publication number: WO 2024/010426

(56) References cited:
- JP-A- 2019 042 784
- JP-A- 2019 048 331
- JP-A- 2019 217 509
- JP-A- H0 857 676
- KR-A- 20070 066 841
- KR-B1- 101 918 981
- KR-B1- 101 918 981
- US-A1- 2019 118 291
- US-A1- 2021 138 585

## Description

The present invention relates to a welding device, and more specifically, to a welding device capable of minimizing welding defects, see claim 1.

### BACKGROUND ART

In general, a welding device includes a laser light source and optical components such as a focusing lens for increasing the energy density of the laser irradiated from the laser light source. In addition, the welding device includes a protective glass configured to prevent the optical components from being damaged and contaminated by spatter or fume, which are by-products generated during welding.

This welding device may be used, for example, for coupling components constituting a battery module. As an example, a battery module may be configured to create a dense structure by overlapping or stacking a plurality of battery cells (e.g., secondary batteries) in a state of being mounted on themselves or in a cartridge to provide high voltage and high current, and then electrically connect them.

In order to configure a battery module with a stable structure in such a battery module, it is important to perform good welding between a module case in which battery cells are accommodated and an end plate configured to cover a bus bar electrically connecting the battery cells. As an example, a welding device for keyhole welding between the module case and the end plate may be configured.

On the other hand, a conventional welding device has a disadvantage that it is difficult to effectively block the flow of spatter or fume generated during welding into the direction of the protective glass. Accordingly, spatter or fume may adhere to the surface of the protective glass to contaminate the protective glass. In this case, there is a problem that the transmittance in the protective glass of the laser irradiated from the optical component to the welding portion is reduced, resulting in welding defects.

US patent application N°2021/138585 A1 (describing the preamble of claim 1);
Korean patent application N°101 918 981 B1;
US patent application N°2019/118291 A1.

### DISCLOSURE

### Technical Problem

The present invention is designed to solve the problems of the related art, and therefore the present invention is directed to providing a welding device capable of minimizing welding defects.

### Technical Solution

A welding device according to one aspect of the present invention is defined in claim 1, and inter alia includes a laser irradiation module configured to irradiate a laser; a protection module disposed outside the laser irradiation module and configured to block flying particles scattered from the welding portion; and a blocking module disposed outside the protection module and configured to block the inflow of the flying particles to the protection module side by introducing gas therein.

The blocking module is configured to form a vortex by the gas introduced therein.

Preferably, the blocking module may be configured to form the vortex along a circumferential direction inside the blocking module.

Preferably, the blocking module may be configured to form the vortex while in contact with the lower surface of the protection module.

According to the present invention, the blocking module includes a body, wherein the body includes a guide portion configured to guide the flow of gas into the body.

According to the present invention, the guide portion includes an inclined portion formed to be inclined upward in the direction of the protection module on the outer circumferential surface of the body; and an incision portion connected to an end adjacent to the protection module in the inclined portion and configured to guide the flow of gas from the outer circumferential surface of the body to the inner circumferential surface of the body.

Preferably, the incision portion may include a first portion configured to face the inner circumferential surface of the body; and a second portion configured to face the outer circumferential surface of the body.

Preferably, the gap between the first portion and the second portion may be configured to become smaller toward the inner circumferential surface of the body.

According to the present invention, the blocking module further includes a chamber accommodating the body therein and having a gas inlet hole configured to introduce gas into the inclined portion.

Preferably, the body may further include a gas inlet channel formed along the circumferential direction of the outer circumferential surface of the body and connected to an end of the inclined portion, wherein the gas inlet channel may be configured to communicate with the gas inlet hole.

Preferably, the guide portion may be configured to be formed in plurality along the outer circumferential surface of the body.

Preferably, the guide portion may be configured to be inclined in one direction along the outer circumferential surface of the body.

Preferably, the welding device may further include a gas ejection module provided below the blocking module and configured to eject gas in a direction perpendicular to the irradiation direction of the laser.

Preferably, the welding device may further include a flying particles blocking member provided outside the blocking module and configured to block the inflow of the flying particles to the blocking module side.

Preferably, the flying particles blocking member may be configured to have an inner diameter that becomes narrower toward the welding portion.

Preferably, the flying particles blocking member may include a filter configured to filter the flying particles on its side.

### Advantageous Effects

According to an embodiment of the present invention, it is possible to prevent the protection portion of a protection module from being contaminated by flying particles by suppressing the flow of flying particles into the protection module through a blocking module capable of allowing gas to flow into the interior. Accordingly, a decrease in transmittance in the protection module of the laser irradiated to the welding portion may be prevented, thereby minimizing the occurrence of welding defects in the welding portion.

In addition, several other additional effects may be achieved by various embodiments of the present invention.

These various effects of the present invention will be described in detail in each embodiment, or descriptions of effects that may be easily understood by those skilled in the art will be omitted.

### DESCRIPTION OF DRAWINGS

The accompanying drawings illustrate a preferred embodiment of the present invention and together with the foregoing disclosure, serve to provide further understanding of the technical features of the present invention, and thus the present invention is not construed as being limited to the drawings, but rather more by the scope of the present invention as defined in the appended claims.
FIGS. 1 and 2 are views showing a welding device.
FIG. 3 is an exploded perspective view of the welding device of FIG. 1.
FIG. 4 is a view showing a detailed structure of the welding device of FIG. 1.
FIGS. 5 and 6 are views showing a detailed structure of a blocking module provided in the welding device of FIG. 1.
FIGS. 7 and 8 are views showing a state in which flying particles are blocked by a blocking module provided in the welding device of FIG. 1.
FIG. 9 is a view showing another welding device.

### BEST MODE

Hereinafter, preferred embodiments of the present invention will be described in detail with reference to the accompanying drawings.

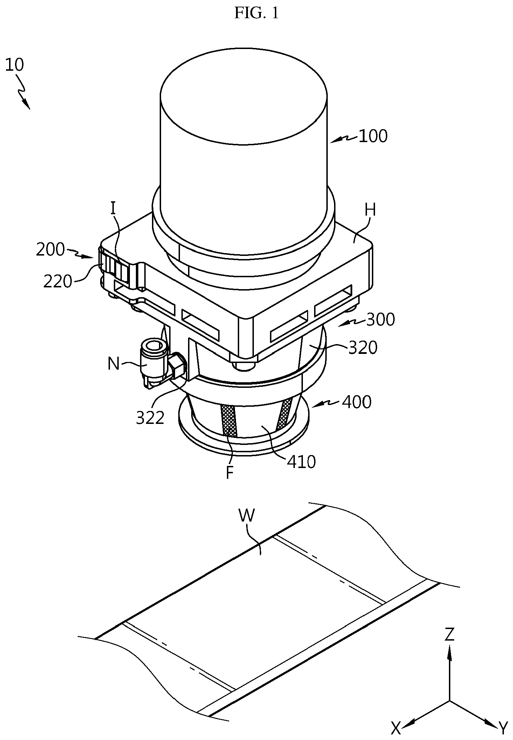

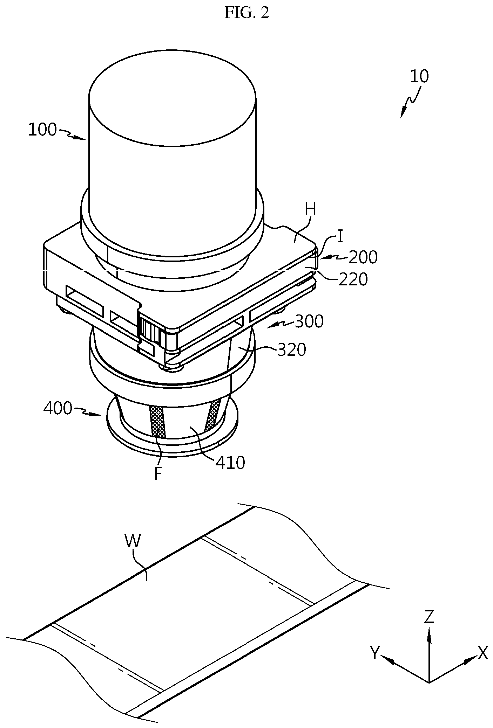

FIGS. 1 and 2 are views showing a welding device 10.

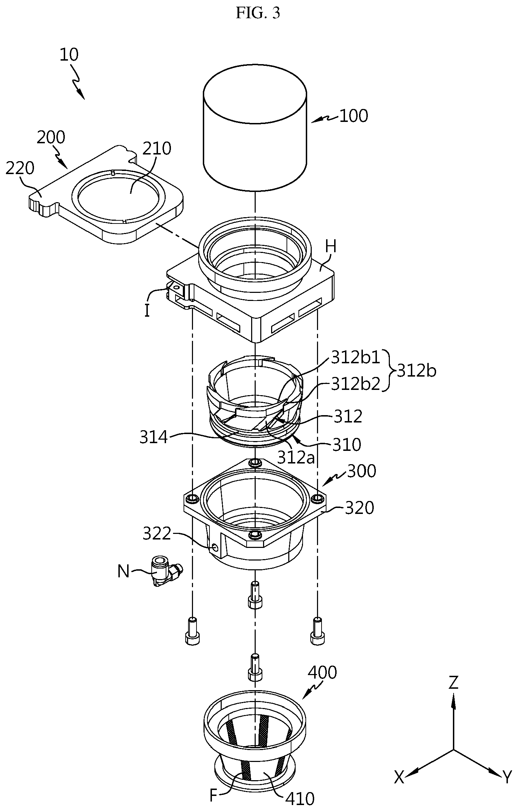

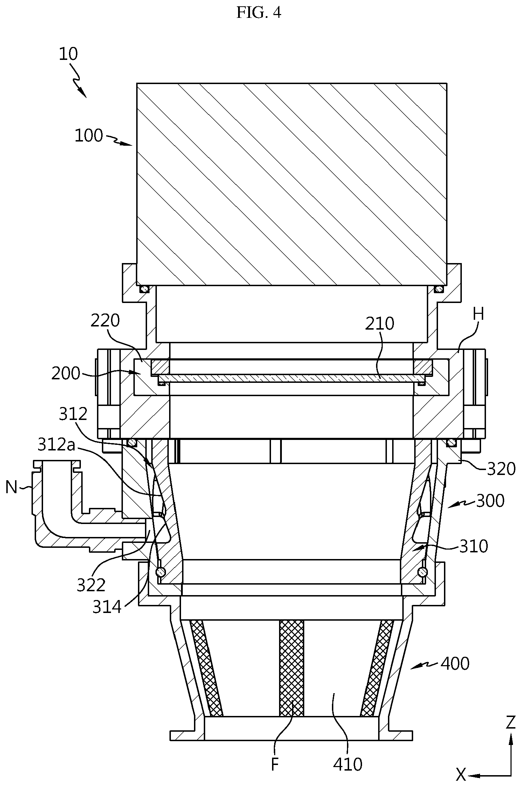

FIG. 3 is an exploded perspective view of the welding device 10 of FIG. 1, and FIG. 4 is a view showing a detailed structure of the welding device 10 of FIG. 1. At this time, illustration of the welding portion W described later in FIGS. 3 and 4 will be omitted.

The X-axis direction shown in the drawings may mean the left-right direction of the welding device 10, the Y-axis direction may mean the front-rear direction of the welding device 10 perpendicular to the X-axis direction on a horizontal plane (XY-plane), and the Z-axis direction may mean the upperlower direction perpendicular to both the X-axis direction and the Y-axis direction. In this case, the Z-axis direction may mean the irradiation direction of laser by the laser irradiation module 100 to be described later.

Referring to FIGS. 1 to 4, the welding device 10 is configured to perform welding at the welding portion W by irradiating a laser.

As an example, the welding portion W may mean a coupling portion between components of a battery module (not shown). In this case, the battery module may include at least one secondary battery therein.

Illustratively, welding between components of the battery module may be performed by a known keyhole welding method. More specifically, the welding device 10 may perform welding between a module case (not shown) and an end plate (not shown) of a battery module for accommodating a secondary battery therein, but is not limited thereto.

The welding device 10 includes a laser irradiation module 100, a protection module 200, and a blocking module 300.

The laser irradiation module 100 may be configured in the form of an optical system to irradiate a laser. Although not shown in detail, the laser may be irradiated in the form of a beam to the welding portion W.

In an embodiment, the laser irradiation module 100 may include a laser light source (not shown) and a focusing lens (not shown).

The laser light source generates the laser.

The focusing lens may improve the energy density of the laser generated from the laser light source. In this case, the laser may pass through the focusing lens and be irradiated to the welding portion W.

The protection module 200 is disposed outside the laser irradiation module 100 and is configured to block flying particles scattered from the welding portion W. Here, the outside may mean a side approaching the welding portion W. In an embodiment, the protection module 200 may be disposed below the laser irradiation module 100. In addition, the flying particles may be spatter or fume, which are processing by-products that may be generated from the welding portion W during welding.

In particular, the protection module 200 may include a protection portion 210 and a protection frame 220.

The protection portion 210 may transmit the laser irradiated from the laser irradiation module 100 toward the welding portion W. In addition, the protection portion 210 may be configured to block flying particles scattered from the welding portion W. As an example, the protection portion 210 may be made of glass, transparent plastic, or the like.

The protection frame 220 may be configured to support the protection portion 210. Specifically, the protection portion 210 may be mounted in a groove formed approximately in the center of the protection frame 220. As an example, the protection frame 220 may include a plastic material with excellent wear resistance, but is not limited thereto.

Meanwhile, the laser irradiation module 100 and the protection module 200 may be disposed side by side in the vertical direction (Z-axis direction) through a separate support member H.

Specifically, on top of the support member H, the laser irradiation module 100 may be coupled. Also, the protection frame 220 may be inserted into an insertion hole I formed in the support member H in the form of a cartridge for easy replacement in the front-rear direction (Y-axis direction) of the welding device 10. In this case, the insertion hole I may be located lower than the coupling portion between the laser irradiation module 100 and the support member H.

The blocking module 300 is disposed outside the protection module 200. In addition, gas (e.g., air) may flow into the blocking module 300 to block the inflow of flying particles to the protection module 200 side. As an example, the blocking module 300 may have an overall shape of a cylinder with a hollow interior. Also, the blocking module 300 may be disposed below the support member H, and the welding portion W may be disposed below the blocking module 300.

In an embodiment, the blocking module 300 may include a plastic material with excellent wear resistance, but is not limited thereto.

That is, the welding device 10 allows gas to flow into the blocking module 300 located on the outside (e.g., bottom) of the protection module 200. Accordingly, the welding device 10 may be configured such that the inside of the blocking module 300 has a pressure greater than atmospheric pressure due to the flow of gas inside the blocking module 300.

In this case, the flying particles scattered from the welding portion W may be suppressed from flowing into the protection module 200 side by the blocking module 300.

By
suppressing the flow of flying particles into the protection module 200 through the blocking module 300 that allows gas to flow into the interior, it is possible to prevent the protection portion 210 of the protection module 200 from being contaminated by flying particles. Accordingly, a decrease in the transmittance of the laser irradiated to the welding portion W in the protection module 200 may be prevented, thereby minimizing the occurrence of welding defects in the welding portion W.

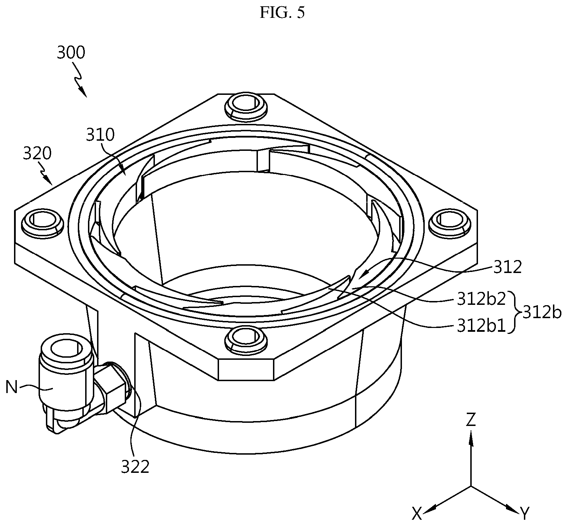

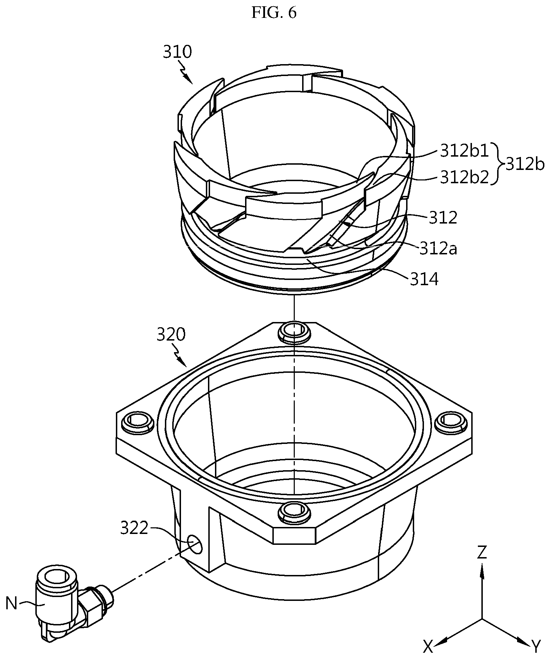

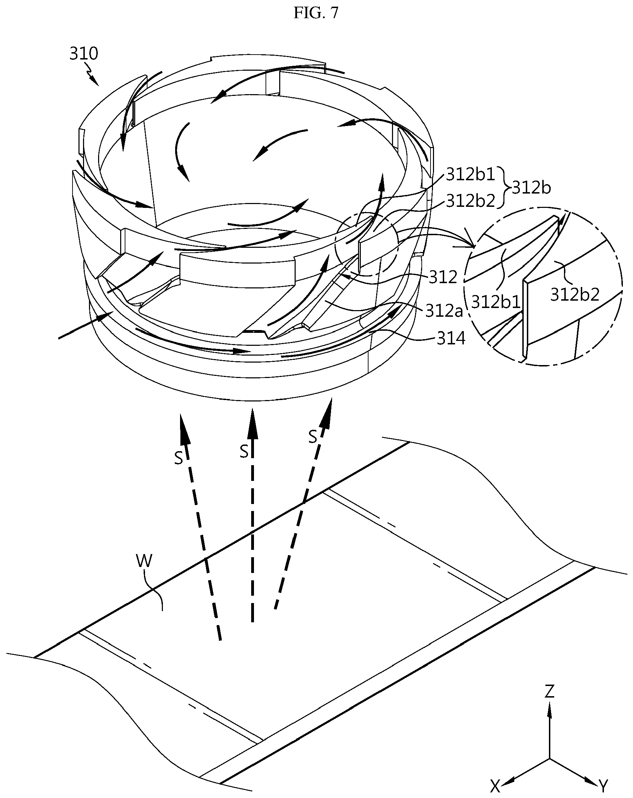

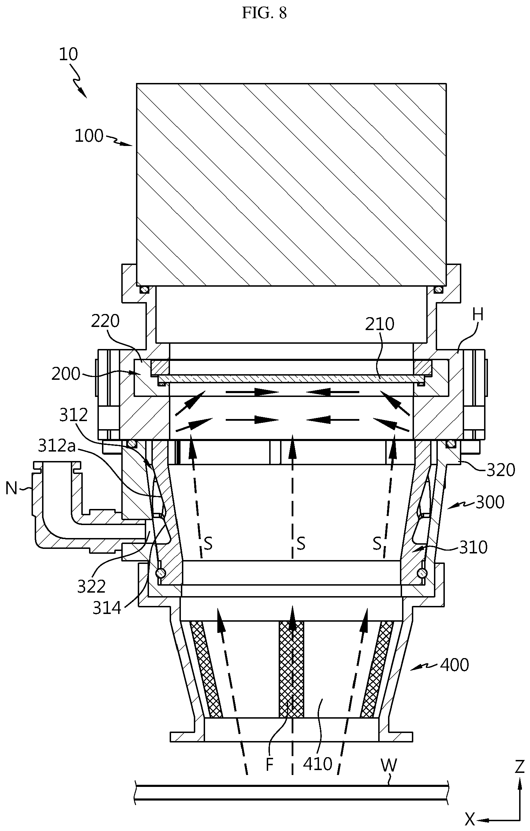

FIGS. 5 and 6 are views showing a detailed structure of a blocking module 300 provided in the welding device 10 of FIG. 1, and FIGS. 7 and 8 are views showing a state in which flying particles are blocked by a blocking module 300 provided in the welding device 10 of FIG. 1. In this case, the flying particles described above in FIGS. 7 and 8 will be denoted by the reference numeral 'S'.

Referring to FIGS. 5 to 8, the blocking module 300 is configured to form a vortex by gas introduced therein.

That is, the gas flowing into the blocking module 300 forms a vortex inside the cylindrical blocking module 300. Accordingly, the inside of the blocking module 300 may more reliably have a pressure greater than atmospheric pressure.

According to this embodiment, it is possible to reliably suppress the inflow of flying particles to the protection module 200.

In particular, as shown in FIG. 7, the blocking module 300 may be configured to form a vortex along the circumferential direction inside the blocking module 300. For example, when the blocking module 300 is viewed from above, a counterclockwise vortex may be formed inside the blocking module 300.

That is, the gas flowing into the blocking module 300 may form a vortex along the circumferential direction inside the cylindrical blocking module 300. Accordingly, inside the blocking module 300, a gas membrane having a substantially circular area may be formed as a blocking layer by the formed vortex.

According to this embodiment, it is possible to suppress flying particles from passing through the entire interior of the blocking module 300 toward the protection module 200.

As shown in FIG. 8, the blocking module 300 may be configured to form a vortex while in contact with the lower surface of the protection module 200. More specifically, the vortex may be formed while in contact with the lower surface of the protection portion 210. That is, a portion of the gas that forms a vortex along the circumferential direction inside the cylindrical blocking module 300 may flow into the direction of the protection module 200 and form a vortex while in contact with the lower surface of the protection module 200.

Thus the vortex formed by the gas flowing into the blocking module 300 blocks the inflow of flying particles while adjacent to and/or in contact with the protection module 200, thereby more reliably suppressing the inflow of flying particles to the protection module 200.

Referring to FIGS. 3 to 8 again, the blocking module 300 may include a body 310.

The body 310 may be configured in a substantially cylindrical shape. This body 310 includes a guide portion 312.

The guide portion 312 is configured to guide the flow of gas into the body 310. This guide portion 312 is provided on the outer circumferential surface of the body 310.

That is, the guide portion 312 induces a vortex to be formed inside the cylindrical body 310 by allowing gas to flow into the body 310. Accordingly, the inside of the body 310 may more reliably have a pressure greater than atmospheric pressure.

Thus it is possible to reliably suppress flying particles from flowing into the protection module 200.

The guide portion 312 includes an inclined portion 312a and an incision portion 312b.

The inclined portion 312a is formed to be inclined upward toward the protection module 200 on the outer circumferential surface of the body 310. Specifically, the inclined portion 312a may be configured to be inclined to the left and/or right from the bottom to the top on the outer circumferential surface of the body 310.

The incision portion 312b is connected to an end adjacent to the protection module 200 at the inclined portion 312a. In addition, the incision portion 312b is configured to guide the flow of gas from the outer circumferential surface of the body 310 to the inner circumferential surface of the body 310. In particular, the incision portion 312b may mean a portion where at least a portion of the body 310 is cut. That is, the incision portion 312b may be configured such that at least a portion of the body 310 is penetrated in an inward and outward direction.

That is, the inclined portion 312a may guide the flow of gas toward the protection module 200 on the outer circumferential surface of the body 310. In addition, the incision portion 312b may guide the gas guided toward the protection module 200 by the inclined portion 312a to the inside of the body 310.

In this case, the gas flowing into the blocking module 300 may form a vortex while adjacent to and/or in contact with the protection module 200.

According to this embodiment, the flow of gas may be easily guided into the interior of the body 310, and the flow of flying particles into the protection module 200 may be more reliably suppressed.

More specifically, the incision portion 312b may include a first portion 312b1 and a second portion 312b2.

The first portion 312b1 may be configured to face the inner circumferential surface of the body 310. In addition, the second portion 312b2 may be configured to face the outer circumferential surface of the body 310.

That is, the first portion 312b1, which is a portion of the incision portion 312b, and the second portion 312b2, which is another portion of the incision portion 312b, may be configured to face opposite sides of each other. According to this configuration, a predetermined space in which gas may flow along the circumferential direction may be formed between the first portion 312b1 and the second portion 312b2.

Thus the gas guided on the outer circumferential surface of the body 310 through the inclined portion 312a may reliably flow into the interior of the body 310 without leaking out to another portion of the body 310 through the space between the first portion 312b1 and the second portion 312b2.

Referring to FIG. 7 again, the gap between the first portion 312b1 and the second portion 312b2 may be configured to become smaller toward the inner circumferential surface of the body 310. In this case, the gap between the first portion 312b1 and the second portion 312b2 may mean a gap with respect to the radial direction of the body 310.

Accordingly, the flow rate of gas introduced into the body 310 may be faster than the flow rate of gas in the inclined portion 312a.

Thus a stronger vortex may be formed inside the body 310 by the gas flowing into the body 310. Accordingly, it is possible to suppress the inflow of flying particles to the protection module 200 more reliably.

Referring to FIGS. 3 to 8 again, the guide portion 312 may be formed in plurality along the outer circumferential surface of the body 310. In this case, the guide portion 312 may be composed in six along the circumferential direction of the body 310, but is not limited thereto.

That is, the guide portion 312 is formed in plurality along the outer circumferential surface of the body 310 in the circumferential direction, so that the gas may be guided to form a vortex along the circumferential direction inside the cylindrical body 310. Accordingly, inside the body 310, a gas membrane having a substantially circular area may be formed by the formed vortex.

Thus it is possible to suppress flying particles from passing through the entire interior of the body 310 toward the protection module 200. Moreover, in this case, the vortex flow inside the body 310 may be formed more strongly. Therefore, the effect of blocking flying particles by vortex may be further improved.

In particular, the guide portion 312 may be configured to be inclined in one direction along the outer circumferential surface of the body 310.

That is, at least one guide portion 312 may be configured to be inclined along the outer circumferential surface of the body 310 in the circumferential direction. In this case, the direction in which the plurality of guide portions 312 are inclined in the circumferential direction of the body 310 may be the same or different from each other. For example, the inclined portion 312a of the guide portion 312 may be configured to be inclined in the right direction as it moves upward.

According to this configuration, by giving directionality to the flow of gas flowing into the body 310, the vortex of gas within the body 310 may be generated more reliably.

Referring to FIGS. 3 to 8 again, the blocking module 300 further includes a chamber 320.

The chamber 320 may be coupled to the above-described support member H in a screw coupling manner to facilitate assembly and replacement.

In addition, the chamber 320 accomodates the body 310 therein. That is, the chamber 320 may protect the body 310 from external impact or the like. Also, the chamber 320 may be configured to surround the outer circumferential surface of the body 310 while accommodating the body 310 therein. Accordingly, the guidance of the gas flow through the inclined portion 312a may be made more stably.

Also, the chamber 320 includes a gas inlet hole 322 configured to introduce gas into the inclined portion 312a. In this case, a separate nozzle N may be coupled to the gas inlet hole 322 to guide the high-pressure compressed gas into the chamber 320.

Thus high-pressure gas may be guided into the body 310 more stably.

Referring to FIGS. 5 to 8 again, the body 310 may further include a gas inlet channel 314.

The gas inlet channel 314 may be formed along the circumferential direction of the outer circumferential surface of the body 310. In addition, the gas inlet channel 314 may be connected to an end of the inclined portion 312a. Specifically, the gas inlet channel 314 may be connected to an end of the inclined portion 312a that is opposite to the portion where the incision portion 312b is connected. For example, the gas inlet channel 314 may be formed on a lower side of the outer circumferential surface of the body 310. Also, the lower end of the inclined portion 312a may be connected to the gas inlet channel 314.

In particular, the gas inlet channel 314 may be configured to communicate with the gas inlet hole 322.

That is, the gas inlet channel 314 may primarily guide the flow of gas flowing into the chamber 320 through the gas inlet hole 322 on the outer circumferential surface of the body 310. Accordingly, the gas introduced into the chamber 320 may be prevented from flowing randomly.

Specifically, the gas flowing into the chamber 320 may be guided to flow along the circumferential direction of the outer circumferential surface of the body 310 through the gas inlet channel 314. For example, the gas introduced into the chamber 320 may flow in a counterclockwise direction (as viewed from above) along the gas inlet channel 314. In addition, the gas flowing along the gas inlet channel 314 may be guided to flow in an interior direction of the body 310 along the guide portion 312.

Thus by giving directionality to the flow of high-pressure gas flowing into the chamber 320, it is possible to induce the flow of gas in an interior direction of the body 310. Therefore, more reliably, high-pressure gas may be more stably guided into the body 310. In addition, in this case, the gas inlet channel 314, together with the inclined portion 312a, may give directionality to the flow of gas in advance, thereby enabling to form a vortex inside the body 310 more reliably.

Referring to FIGS. 1 to 3 again, the welding device 10 may further include a flying particles blocking member 400. This flying particles blocking member 400 may have a substantially cylindrical shape with a hollow interior.

The flying particles blocking member 400 may be provided on the outside (e.g., bottom) of the blocking module 300 and configured to block the inflow of flying particles to the blocking module 300 side. In addition, the upper portion of the flying particles blocking member 400 may be fitted into the lower portion of the chamber 320 of the blocking module 300.

Accordingly, an additional separation space by the flying particles blocking member 400 may be provided between the blocking module 300 and the welding portion W. Therefore, the flow of flying particles in the flying particles blocking member 400 may be weakened, and thus the blocking of flying particles in the blocking module 300 may be performed more effectively.

In particular, the flying particles blocking member 400 may be configured to have an inner diameter that becomes narrower toward the welding portion W. That is, the flying particles blocking member 400 may be configured to have an inner diameter that becomes narrower toward the bottom.

Therefore, the flow rate of flying particles flowing in the flying particles blocking member 400 may be reduced toward the blocking module 300.

Thus the flow of flying particles in the additional separation space provided by the flying particles blocking member 400 may be reduced toward the blocking module 300, thereby blocking flying particles in the blocking module 300 more effectively.

In addition, the flying particles blocking member 400 may include a filter F configured to filter flying particles on its side. As an example, the filter F may be configured in the form of a mesh in which a plurality of fine holes are formed.

Specifically, the side surface of the flying particles blocking member 400 may be configured in a form where a plurality of ribs 410 are formed in the circumferential direction. Also, openings are formed between the plurality of ribs 410, and the filter F may be provided in these openings. Alternatively, the entire side surface of the flying particles blocking member 400 may also be composed of the filter F.

The filter F may filter flying particles within the additional separation space provided between the blocking module 300 and the welding portion W.

Accordingly, the amount of flying particles flowing into the blocking module 300 side may be minimized.

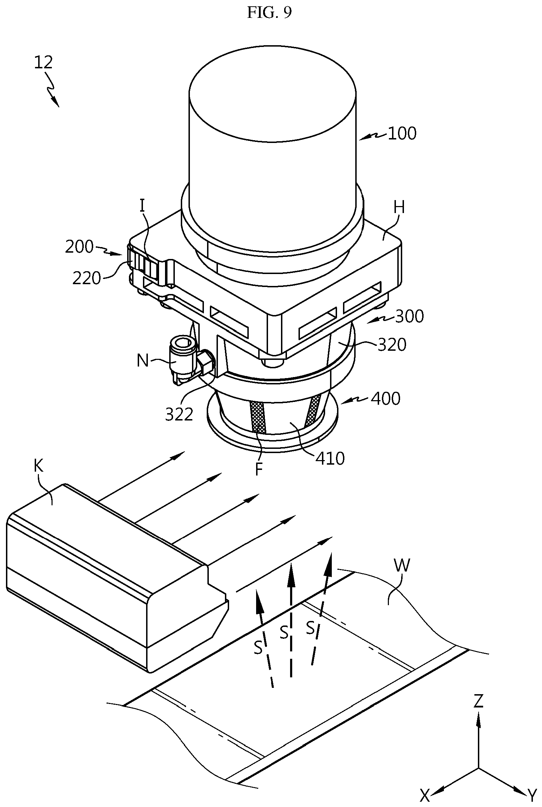

FIG. 9 is a view showing a welding device 12. In this case, the flying particles described above in FIG. 9 will be denoted by the reference numeral 'S'.

Since the welding device 12 is similar to the welding device 10 being described above, wherein redundant descriptions of configurations that are substantially the same as or similar to the previous embodiment will be omitted, and hereinafter, differences from the previous embodiment will be mainly described.

Referring to FIG. 9, the welding device 12 may further include a gas ejection module K.

The gas ejection module K may be provided at the lower portion of the blocking module 300. That is, the gas ejection module K may be interposed between the blocking module 300 and the welding portion W. As an example, the gas ejection module K may be an air knife.

In addition, the gas ejection module K may be configured to eject gas in a direction perpendicular to the laser irradiation direction (e.g., the X-axis direction), as shown in FIG. 9. Accordingly, flying particles scattered from the welding portion W may be prevented from flowing into the blocking module 300.

In this case, the welding device 12 may also be configured with the gas ejection module K interposed between the flying particles blocking member 400 and the welding portion W.

Thus flying particles may be blocked primarily through the gas ejection module K and secondarily through the blocking module 300, thereby blocking the flow of the flying particles into the protection module 200 more reliably.

While the present invention has been hereinabove described with regard to a limited number of embodiments and drawings, the present invention is not limited thereto and it is obvious to those skilled in the art that a variety of modifications and changes may be made thereto within the scope of the present invention as defined in the appended claims.

## Claims

1. A welding device (10) comprising:
a laser irradiation module (100) configured to irradiate a laser;
a protection module (200) disposed outside the laser irradiation module (100) and configured to block flying particles scattered from the welding portion (W); and
a blocking module (300) disposed outside the protection module (200), configured to block the inflow of the flying particles to the protection module (200) side by introducing gas therein the welding device (10 being **characterised in that**:
the blocking module (300) comprises a body (310),
wherein the body (310) comprises a guide portion (312) configured to guide the flow of gas into the body (310);
wherein the guide portion (312) comprises:
an inclined portion (312a) formed to be inclined upward in the direction of the protection module (200) on the outer circumferential surface of the body (310); and
an incision portion (312b) connected to an end adjacent to the protection module (200) in the inclined portion (312a) and configured to guide the flow of gas from the outer circumferential surface of the body (310) to the inner circumferential surface of the body (310);
wherein the blocking module (300) further comprises a chamber (320) accommodating the body (310) therein and having a gas inlet hole (322) configured to introduce gas into the inclined portion (312a); and
wherein the blocking module (300) is configured to form during use a vortex by the gas introduced therein.

2. The welding device (10) according to claim 1,
wherein the blocking module (300) is configured to form the vortex along a circumferential direction inside the blocking module (300).

3. The welding device (10) according to claim 1,
wherein the blocking module (300) is configured to form the vortex while in contact with the lower surface of the protection module (200).

4. The welding device (10) according to claim 1,
wherein the incision portion (312b) comprises:
a first portion (312b1) configured to face the inner circumferential surface of the body (310); and
a second portion (312b2) configured to face the outer circumferential surface of the body (310).

5. The welding device (10) according to claim 4,
wherein the gap between the first portion (312b1) and the second portion (312b2) is configured to become smaller toward the inner circumferential surface of the body (310).

6. The welding device (10) according to claim 1,
wherein the body (310) further comprises a gas inlet channel (314) formed along the circumferential direction of the outer circumferential surface of the body (310) and connected to an end of the inclined portion (312a),
wherein the gas inlet channel (314) is configured to communicate with the gas inlet hole (322).

7. The welding device (10) according to claim 1,
wherein the guide portion (312) is configured to be formed in plurality along the outer circumferential surface of the body (310).

8. The welding device (10) according to claim 1,
wherein the guide portion (312) is configured to be inclined in one direction along the outer circumferential surface of the body (310).

9. The welding device (10) according to claim 1,
which further comprises a gas ejection module (K) provided below the blocking module (300) and configured to eject gas in a direction perpendicular to the irradiation direction of the laser.

10. The welding device (10) according to claim 1,
which further comprises a flying particles blocking member (400) provided outside the blocking module (300) and configured to block the inflow of the flying particles to the blocking module (300) side.

11. The welding device (10) according to claim 10,
wherein the flying particles blocking member (400) is configured to have an inner diameter that becomes narrower toward the welding portion (W).

## Patentansprüche

1. Schweißvorrichtung (10), umfassend: ein Laserbestrahlungsmodul (100), das konfiguriert ist, um einen Laser abzustrahlen; ein Schutzmodul (200), das außerhalb des Laserbestrahlungsmoduls (100) angeordnet und konfiguriert ist, um vom Schweißabschnitt (W) gestreute fliegende Partikel zu blockieren; und ein Blockiermodul (300), das außerhalb des Schutzmoduls (200) angeordnet und konfiguriert ist, um den Zufluss der fliegenden Partikel zur Seite des Schutzmoduls (200) durch Einleiten von Gas darin zu blockieren, wobei die Schweißvorrichtung (10) **dadurch gekennzeichnet ist, dass**: das Blockiermodul (300) einen Körper (310) umfasst, wobei der Körper (310) einen Führungsabschnitt (312) umfasst, der konfiguriert ist, um den Gasfluss in den Körper (310) zu leiten; wobei der Führungsabschnitt (312) umfasst:
einen geneigten Abschnitt (312a), der so ausgebildet ist, dass er in Richtung des Schutzmoduls (200) an der äußeren Umfangsfläche des Körpers (310) nach oben geneigt ist; und
einen Einschnittabschnitt (312b), der mit einem Ende benachbart zum Schutzmodul (200) in dem geneigten Abschnitt (312a) verbunden und konfiguriert ist, um den Gasfluss von der äußeren Umfangsfläche des Körpers (310) zur inneren Umfangsfläche des Körpers (310) zu leiten; wobei das Blockiermodul (300) ferner eine Kammer (320) umfasst, die den Körper (310) darin aufnimmt und ein Gaseinlassloch (322) aufweist, das konfiguriert ist, um Gas in den geneigten Abschnitt (312a) einzuleiten; und wobei das Blockiermodul (300) konfiguriert ist, um während des Gebrauchs durch das darin eingeleitete Gas einen Wirbel zu bilden.

2. Schweißvorrichtung (10) nach Anspruch 1, wobei das Blockiermodul (300) konfiguriert ist, um den Wirbel entlang einer Umfangsrichtung innerhalb des Blockiermoduls (300) zu bilden.

3. Schweißvorrichtung (10) nach Anspruch 1, wobei das Blockiermodul (300) konfiguriert ist, um den Wirbel zu bilden, während es in Kontakt mit der unteren Fläche des Schutzmoduls (200) ist.

4. Schweißvorrichtung (10) nach Anspruch 1, wobei der Einschnittabschnitt (312b) umfasst:
einen ersten Abschnitt (312b1), der konfiguriert ist, um der inneren Umfangsfläche des Körpers (310) zugewandt zu sein; und
einen zweiten Abschnitt (312b2), der konfiguriert ist, um der äußeren Umfangsfläche des Körpers (310) zugewandt zu sein.

5. Schweißvorrichtung (10) nach Anspruch 4, wobei der Spalt zwischen dem ersten Abschnitt (312b1) und dem zweiten Abschnitt (312b2) so konfiguriert ist, dass er in Richtung der inneren Umfangsfläche des Körpers (310) kleiner wird.

6. Schweißvorrichtung (10) nach Anspruch 1, wobei der Körper (310) ferner einen Gaseinlasskanal (314) umfasst, der entlang der Umfangsrichtung der äußeren Umfangsfläche des Körpers (310) ausgebildet und mit einem Ende des geneigten Abschnitts (312a) verbunden ist, wobei der Gaseinlasskanal (314) konfiguriert ist, um mit dem Gaseinlassloch (322) in Verbindung zu stehen.

7. Schweißvorrichtung (10) nach Anspruch 1, wobei der Führungsabschnitt (312) konfiguriert ist, um in einer Vielzahl entlang der äußeren Umfangsfläche des Körpers (310) ausgebildet zu sein.

8. Schweißvorrichtung (10) nach Anspruch 1, wobei der Führungsabschnitt (312) konfiguriert ist, um in einer Richtung entlang der äußeren Umfangsfläche des Körpers (310) geneigt zu sein.

9. Schweißvorrichtung (10) nach Anspruch 1, die ferner ein Gasausstoßmodul (K) umfasst, das unterhalb des Blockiermoduls (300) vorgesehen und konfiguriert ist, um Gas in einer Richtung senkrecht zur Bestrahlungsrichtung des Lasers auszustoßen.

10. Schweißvorrichtung (10) nach Anspruch 1, die ferner ein Blockierelement für fliegende Partikel (400) umfasst, das außerhalb des Blockiermoduls (300) vorgesehen und konfiguriert ist, um den Zufluss der fliegenden Partikel zur Seite des Blockiermoduls (300) zu blockieren.

11. Schweißvorrichtung (10) nach Anspruch 10, wobei das Blockierelement für fliegende Partikel (400) so konfiguriert ist, dass es einen Innendurchmesser aufweist, der in Richtung des Schweißabschnitts (W) schmaler wird.

## Revendications

1. Dispositif de soudage (10) comprenant :
un module d'irradiation laser (100) configuré pour irradier un laser ;
un module de protection (200) disposé à l'extérieur du module d'irradiation laser (100) et configuré pour bloquer les particules volantes dispersées depuis la partie de soudage (W) ; et
un module de blocage (300) disposé à l'extérieur du module de protection (200), configuré pour bloquer l'afflux des particules volantes vers le côté du module de protection (200) en y introduisant du gaz,
le dispositif de soudage (10) étant **caractérisé en ce que** :
le module de blocage (300) comprend un corps (310),
le corps (310) comprenant une partie de guidage (312) configurée pour guider le flux de gaz dans le corps (310) ;
la partie de guidage (312) comprenant :
une partie inclinée (312a) formée pour être inclinée vers le haut dans la direction du module de protection (200) sur la surface circonférentielle extérieure du corps (310) ; et
une partie d'incision (312b) connectée à une extrémité adjacente au module de protection (200) dans la partie inclinée (312a) et configurée pour guider le flux de gaz de la surface circonférentielle extérieure du corps (310) à la surface circonférentielle intérieure du corps (310) ;
dans lequel le module de blocage (300) comprend en outre une chambre (320) logeant le corps (310) en son sein et ayant un trou d'entrée de gaz (322) configuré pour introduire du gaz dans la partie inclinée (312a) ; et
dans lequel le module de blocage (300) est configuré pour former pendant son utilisation un vortex par le gaz qui y est introduit.

2. Dispositif de soudage (10) selon la revendication 1,
dans lequel le module de blocage (300) est configuré pour former le vortex le long d'une direction circonférentielle à l'intérieur du module de blocage (300).

3. Dispositif de soudage (10) selon la revendication 1,
dans lequel le module de blocage (300) est configuré pour former le vortex tout en étant en contact avec la surface inférieure du module de protection (200).

4. Dispositif de soudage (10) selon la revendication 1,
dans lequel la partie d'incision (312b) comprend :
une première partie (312b1) configurée pour faire face à la surface circonférentielle intérieure du corps (310) ; et
une seconde partie (312b2) configurée pour faire face à la surface circonférentielle extérieure du corps (310).

5. Dispositif de soudage (10) selon la revendication 4,
dans lequel l'espace entre la première partie (312b1) et la seconde partie (312b2) est configuré pour devenir plus petit vers la surface circonférentielle intérieure du corps (310).

6. Dispositif de soudage (10) selon la revendication 1,
dans lequel le corps (310) comprend en outre un canal d'entrée de gaz (314) formé le long de la direction circonférentielle de la surface circonférentielle extérieure du corps (310) et connecté à une extrémité de la partie inclinée (312a),
dans lequel le canal d'entrée de gaz (314) est configuré pour communiquer avec le trou d'entrée de gaz (322).

7. Dispositif de soudage (10) selon la revendication 1,
dans lequel la partie de guidage (312) est configurée pour être formée en pluralité le long de la surface circonférentielle extérieure du corps (310).

8. Dispositif de soudage (10) selon la revendication 1,
dans lequel la partie de guidage (312) est configurée pour être inclinée dans une direction le long de la surface circonférentielle extérieure du corps (310).

9. Dispositif de soudage (10) selon la revendication 1,
comprenant en outre un module d'éjection de gaz (K) prévu en dessous du module de blocage (300) et configuré pour éjecter du gaz dans une direction perpendiculaire à la direction d'irradiation du laser.

10. Dispositif de soudage (10) selon la revendication 1,
comprenant en outre un élément de blocage de particules volantes (400) prévu à l'extérieur du module de blocage (300) et configuré pour bloquer l'afflux des particules volantes vers le côté du module de blocage (300).

11. Dispositif de soudage (10) selon la revendication 10,
dans lequel l'élément de blocage de particules volantes (400) est configuré pour avoir un diamètre intérieur qui se rétrécit vers la partie de soudage (W).
